# EUROPEAN PATENT SPECIFICATION

(11) **EP 2 340 591 B1**
(45) Date of publication and mention of the grant of the patent: **01.01.2014**
(21) Application number: 09815692.0
(22) Date of filing: 25.09.2009
(51) Int. Cl.: H02B 13/025

(54) **SWITCHING INSTALLATION WITH ARC PROTECTION AND ARC PROTECTION METHOD**
SCHALTINSTALLATION MIT BOGENSCHUTZ UND BOGENSCHUTZVERFAHREN
INSTALLATION DE COMMUTATION DOTÉE DE PROTECTION CONTRE L'ARC ET PROCÉDÉ DE PROTECTION CONTRE L'ARC

(30) Priority: 26.09.2008 EP 08165192
(43) Date of publication of application: 06.07.2011
(73) Proprietor: Eaton Industries (Netherlands) B.V., 7559 SC Hengelo (NL)
(72) Inventor: LAMMERS, Arend, NL-7558 TV Hengelo (NL); NITERT, Gerhardus, NL-7468 AT Enter (NL)
(74) Representative: Tabeling, Marcella M.J.
(86) International application number: PCT/EP2009/062454
(87) International publication number: WO 2010/034817

(56) References cited:
- DE-A1- 3 131 417
- DE-A1-102006 033 766
- US-A- 4 286 301

## Description

### Technical field

The present invention relates to a switching installation comprising a gas-filled enclosure. The invention also relates to method for use with such switching installation.

### Background

Medium and high voltage switching installations, for voltages of over 1000 V, are widely used with SF₆ insulation due to its good insulation properties, allowing to obtain compact installations. There is however a strong wish to move away from SF₆ as insulation medium, on account of the negative consequences of SF₆ for the environment -notably of its decomposition products HF, SOF₂ and SO₂-. Therefore, air is used more and more as an insulation medium. As a consequence of the factor 2 to 4 less well insulation quality of air, the size of the installation needs to be increased to prevent electrical sparkover or arcing between the various voltage-carrying parts. This in turn leads to an increase in the amount of energy released upon occasional arcing, as the amount of energy is proportional to the size of the arc, which is proportional to the distance between the conductive parts.

Without further measures, the energetic arcing will continue until the voltage is taken of the voltage-carrying parts, which is generally done by switching the installation off of the grid with an external switch further up in the grid in a power supply line feeding the switching installation. Such external switching is generally done after about one second after the misbehaviour of the switching installation has been detected by an external monitoring system in the grid. One second of energetic arcing may however result in a significant danger and damage. The switching installation thus has to be equipped with a measure to take away the energetic arc that is sufficiently fast to reduce the effects to acceptable levels.

A switching installation with an air-filled enclosure with arc protection is described in EP 1 463 172 A1, in which the input conductor is automatically grounded upon the occurrence of an energetic arc in the enclosure, in order to stop the arcing. It relies on a pressure increase in the enclosure upon the occurrence of an energetic arc and the resulting heating of the air. The enclosure comprises a venting panel, which opens upon an increase of the pressure in the enclosure and, via a flexible cable, acts on an earthing switch. The earthing switch short-circuits the conductor to ground, such that the arcing stops.

The known switching installation has the drawback that, although the arcing is stopped, hot gasses are released through the venting panel and may thus comprise a safety risk for operating personnel in the vicinity of the switching installation.

Another example of a switching installation in which pressure generated by an internal arc is used for actuating a grounding switch is shown in EP 0 235 755 A1. Also in this installation, actuation of the grounding switch causes the internal arc to disappear. DE102006033766A1 discloses a contact system for a short-circuiting device in a switchboard plant.A robust arc protection mechanism is also beneficial for systems using SF₆ insulation. Although an arc in such a system is shorter, hence less energetic, arcing may still cause damage to the switching installation, which may cause a unwanted release of hot gasses, such as the SF₆-decomposition products, and more important a safety risk for operating personnel. Moreover, as SF₆ is a greenhouse gas, release of SF₆ is unwanted for environmental reasons.

### Summary

Therefore, the present invention aims to provide a switching installation comprising a gas-filled enclosure with an improved level of safety against the effects of the occurrence of arcing, with a large degree of robustness. This object is solved by a switching installation according to claim 1.

For this purpose, the switching installation comprising the gas-filled enclosure comprises:
- an input conductor arranged to carry an input voltage,
   the input conductor and the enclosure being insulated from each other by a gas and solid insulation, and
- an actuator and an arc initiator,
   the actuator being arranged to actuate the arc initiator upon the occurrence of a first arc with a first length in the enclosure,
   the arc initiator creating, upon being actuated, a path for a second arc of a second length, the second length being shorter than the first length.

As soon as the path for the second arc is created, the first arc will extinguish and the second arc having a shorter length will appear. This second, shorter, arc will bring less energy into the enclosure compared to the first, longer, arc. The risk that the installation will be damaged is thus reduced. Moreover, if the enclosure would anyhow break, the release of hot gasses and possibly even fire will be less energetic and its effects less severe. As a result, the associated risk for the installation and the people in its vicinity, e.g. the operators, is reduced.

Also the second, shorter, arc will be at a well-defined position, i.e., with the arc initiator, whereas the position of the first energetic arc is unpredictable. This can be beneficially exploited when designing the enclosure, as there is less need to design the complete enclosure to be able to withstand an energetic arc at any position for a significant time.

The gas e.g. comprises substantially air or SF₆.

In a further embodiment, the actuator is arranged to react on an increase in pressure in the enclosure upon the occurrence of the first arc.

The occurrence of an energetic arc will lead to an increase of the pressure in the enclosure, as the gas expands upon being heated. This pressure will be referred to as the arc pressure.

In one embodiment, the actuator comprises a mechanical link with the enclosure and the actuator is arranged to transfer an expansion of a part of the enclosure to the arc initiator using the mechanical link.

Upon the occurrence of an energetic arc, the arc pressure generates an expansion of the enclosure, or a section thereof. This expansion can be directly transferred by a mechanical link connected to the expanding section. The mechanical link will thus move with the expansion of the enclosure, and actuate the arc initiator.

The arc initiator may be mechanically connected to the actuator. The arc initiator may alternatively be positioned at a small distance from the actuator, such that the actuator can freely move over a small distance before actuating the arc initiator.

In an alternative embodiment, the actuator comprises a pressure box with a flexible input surface and a flexible output surface connected to the arc initiator, and the arc pressure generates an inward movement of the flexible input surface of the pressure box, generating an outward movement of the flexible output surface.

The arc pressure will act upon the pressure box, and will thus be transferred by the pressure box to a movement of the arc initiator.

In another alternative embodiment, the actuator comprises an arc detector sensing the occurrence of an arc.

The arc detector may detect a level of light originating from the first arc or a level of ionization originating from the first arc. Also, the arc detector may actively sense the pressure increase using a pressure sensor. Once the arc detector senses the occurrence of an arc, the actuator will be operated to drive the arc initiator.

In embodiments, the second length is at most half of the first length. In further embodiments, the second length is at most one quarter of the first length.

As arc energy is proportional to arc length, this reduction of the arc length will thus directly result in a reduction of the arc energy with the same fraction, i.e., a reduction of the arc length with a factor of two will reduce the arc energy with substantially the same factor of two.

The arc is thus effectively moved to a position where the length of the arc is much reduced. Moreover, the length and position of the arc are also well controlled, as they are determined by the well-defined path for the second arc.

In embodiments, the actuator and the arc initiator are situated inside the enclosure.

This has the advantage that no additional space is required around the enclosure, so as not to increase the space required to fit the enclosure.

In a further embodiment, the solid insulation comprises a solid cable isolation for insulating the input conductor, and the arc initiator is arranged to create, upon being actuated, the path for the second arc through a section of the solid cable insulation.

The path for the second arc is thus created in an environment comprising solid insulating material in stead of an environment comprising a gas. The path of the second arc is thus well-controlled and located at a relatively safe location.

In a further embodiment, the arc initiator comprises a driving peg and an insulating plug with a first surface and an second surface,
the insulating plug being inserted in a hole in the solid cable isolation around the input conductor,
the driving peg being arranged to, when actuated by the actuator, perforate the insulating plug from the first surface to the second surface,
in order to create a channel for the path for the second arc.

The driving peg may be in contact with the enclosure, e.g., via a conductive mechanical connection to the enclosure. The driving peg may be conductive. The driving peg may be grounded, directly, via the enclosure or indirectly.

The insulating plug may be positioned in a hole in a solid insulation around the cable connector. The solid insulation and the insulating plug assure that the part of the switching installation where all high voltage parts are positioned at close distance to the enclosure and other parts is well insulated from the enclosure and other parts during normal operation. The insulation is broken once the arc initiator is actuated by the actuator upon an expansion of the expanding section of the enclosure when a high-energetic arc occurs.

The driving peg may be in substantially direct contact with the input conductor in operation shortly after having perforated the insulating plug, thus short-circuiting the cable connector to ground.

The driving peg will burn upon being in direct contact with the cable connector, as it is dimensioned such that it cannot withstand the short circuit current. This breaks the direct contact, and leaves a channel for the path for the second arc. The insulating plug may also burn, partly or completely.

In other words, once the peg will get in contact with the cable connector, or get very close to it, the peg will burn. After the peg has burned, the contact will be lost but an arc path will remain.

The arc protection thus does not rely on the presence of a non-interrupted, metallic grounding path, but in stead continues to work by providing the second arc path. This makes the arc protection more robust than a mechanism which relies on a non-interrupted, metallic grounding path as in the EP 1 463 172 A1 document discussed above.

Alternatively, the driving peg may perforate the insulating plug and come to a close distance to the input conductor, separated by a thin gap only. The thin gap may be sufficiently small to allow the current to flow from the input conductor to the driving peg, substantially immediately forming an arc between the input conductor and the driving peg. The driving peg may then burn, and an arc path may remain between the input conductor and ground.

The driving peg may be a metallic element with a sharp tip at its end.

The sharp tip allows an easy penetration of the insulating plug.

The arc initiator further may comprise a metallic plug with a guiding channel, the driving peg being arranged to, when actuated by the actuator, move through the guiding channel, and the metallic plug being grounded.

The guiding channel may be a cylindrical hole extending through the metallic plug.

The second arc path that is thus created then extends from the input conductor through the hole in the insulating plug (if still present), to the metallic plug. The metallic plug is designed such as to withstand the short short-circuit current pulse.

The driving peg may be grounded via the metallic plug.

The insulating plug may comprise a conductive layer at the first surface.

This shields the driving peg dielectrically from the input conductor during normal operation of the switching installation.

The insulating plug may be a substantially solid plug made from an insulating material.

The insulating plug may comprise a rubber material.

The rubber allows easy penetration by the driving peg. Moreover, the rubber provides a good dielectric isolation between the voltage carrying input conductor at one side of the insulating plug and the grounded parts at the other side of the insulating plug.

In an embodiment, the insulating plug comprises a vacuum chamber and the first surface comprises a first end cap arranged to maintain a vacuum in the vacuum chamber when the first end cap is intact and to break the vacuum when the first end cap is perforated by the driving peg.

The vacuum chamber provides an insulation when it is intact, i.e. when the first end cap is intact and maintaining a vacuum in the vacuum chamber. Such vacuum provides a very good insulation.

When the first end cap is perforated, the vacuum chamber fills with the gas from the enclosure and the good insulation provided by vacuum is removed. As a result, the driving peg comes into contact with the input conductor or at a sufficiently close distance to the input conductor, thus creating the channel for the path for the second arc.

In a further embodiment, the enclosure is grounded, so as to have a well-defined voltage reference and to minimize interference to and from the outside world.

The path for the second arc may be created, upon actuation of the arc initiator, between the input conductor and ground.

The gas in the enclosure may comprise a gas component selected from the group of air and SF₆.

Both air and SF₆ can serve as an insulation between the enclosure, the input conductor and possible other conductive elements in the enclosure.

As discussed above, air may be used because of, e.g., environmental reasons. SF₆ may be used for maximum compactness of the enclosure.

The switching installation may further comprise a circuit breaker, which is connected to the input conductor, an optional disconnector for making or breaking a conductive connection between the input conductor and a rail system, the disconnector and the rail system running through the enclosure.

The switching installation may be of three-phase design, with three of each of the abovementioned components per functional unit (also referred to as a field), these components being physically and electrically separated from one another for each phase.

The switching installation may further comprise a grounding device with an operating handle, the operating handle being situated at the outside of the enclosure, wherein the grounding device is arranged to be operated by an operator from the operating handle, and to ground at least one of the input conductor and the other conducting elements upon being operated. This allows the operator to manually put the switching installation in a safe mode, e.g., when it needs to be accessed for maintenance.

In a further aspect, the present invention related to a method for use with a switching installation comprising a gas-filled enclosure, which comprises creating upon the occurrence of a first arc with a first length in the enclosure a path for a second arc of a second length, the second length being shorter than the first length.

In a further embodiment, creating the path for the second arc comprises reacting on an increase in pressure in the enclosure.

In an embodiment the method, the path for the second arc is created through a section of a solid cable insulation around an input conductor arranged to carry an input voltage, the input conductor and the enclosure being insulated from each other by a gas and solid insulation comprising the solid cable insulation.

### Short description of figures

These and other aspects of the invention will be further elucidated and described in detail with reference to the drawings, in which corresponding reference symbols indicate corresponding parts:
Fig. 1 shows a simplified cross-sectional view through an enclosure in a switching installation according to a first embodiment of the present invention;
Fig. 2 shows a simplified cross-sectional view through the enclosure in the switching installation according to the first embodiment of the present invention upon energetic arcing;
Fig. 3 shows a simplified cross-sectional view upon activation of the arc protection;
Fig. 4a - 4c show simplified cross-sectional views after activation of the arc protection;
Fig. 5 shows a simplified cross-sectional view through an enclosure in a switching installation according to a second embodiment of the present invention;
Fig. 6 shows a simplified cross-sectional view through the enclosure in the switching installation according to the second embodiment of the present invention upon energetic arcing;
Fig. 7 shows a simplified cross-sectional view through an enclosure in a switching installation according to a third embodiment of the present invention;
Fig. 8a shows a simplified cross-sectional view through an enclosure in a switching installation according to a fourth embodiment of the present invention;
Fig. 8b shows a detail of Fig. 8a;
Fig. 9a shows a simplified cross-sectional view through the enclosure in the switching installation according to the fourth embodiment of the present invention upon energetic arcing;
Fig. 9b shows a detail of Fig. 9a;
Fig. 10 shows a mechanical link for use in the fourth embodiment;
Fig. 11 and Fig. 12 show details of an alternative embodiment of the present invention.

### Detailed description

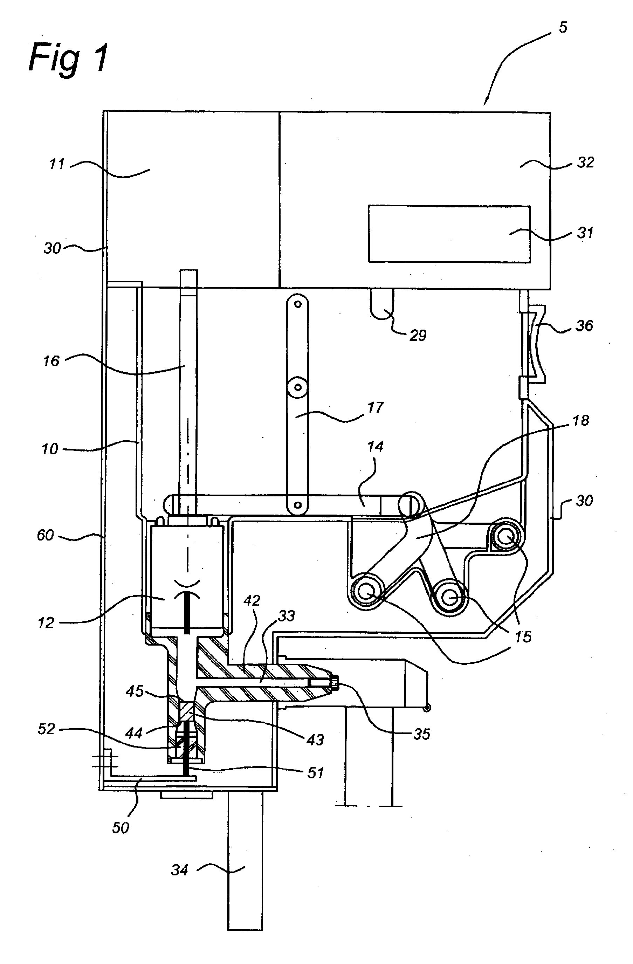

Fig. 1 shows a simplified cross-sectional view through an example of an electrical switching installation 5 for medium or high voltage according to one embodiment of the present invention. The switching installation 5 comprises a closed enclosure 30 made from metal, inside which the elements of the switching installation 5 are located. The enclosure 30 is mounted on a securing frame 34. In the example shown, the switching installation 5 is used to make or break an electrical connection between a power supply line 35, which is connected to a cable connection 33, and one of the rails 15 of a three-phase rail system. A conductor leads from the cable connection 33 to a bottom connection of a circuit breaker 12, in the form of a vacuum circuit breaker, which is actuated by a drive rod 16. In the switching installation 5, the circuit breaker 12 is used to switch currents on and off. The other connection of the circuit breaker 12 is connected, in the example shown, via a sliding electrically conductive connection, to a first side of a disconnector 14 which is actuated by a second drive rod 17. The sliding electrically conductive connection means that there is electrical contact between circuit breaker 12 and disconnector 14 irrespective of the position of the circuit breaker 12 and the disconnector 14. In the closed position, the other side of the disconnector 14 is in contact with a branch rail 18, which is connected to one of the rails 15 which extends perpendicular to the plane of the drawing. The disconnector 14 can also electrically disconnect the conduction path between cable connection 33 and rails 15 by means of the second drive rod 17. The disconnector 14 can also be brought into contact with a ground contact 29, so that the entire electric circuit from circuit breaker 12 can be grounded. The drive rod 16 and second drive rod 17 for the circuit breaker 12 and disconnector 14, respectively, are operated by a drive mechanism 11 which is located on the top side of the closed enclosure 30 indicated by a thick line in Fig. 1. In addition to this mechanism 11, on the top side of the enclosure 30 there is also a space for secondary equipment 31 (such as safety, measuring and recording equipment) and a control panel 32.

Fig. 1 shows a cross-sectional view which only shows one phase section of a switching installation 5. It will be clear to the person skilled in the art that the other two phase sections of the switching installation 5 are located in the direction perpendicular to the plane of the drawing, the corresponding branch rail 18 then in each case being connected to a different rail 15 of the rail system. The three phase sections together form a functional unit, also referred to as a field. Therefore, for a complete switching installation 5, a plurality of functional units can be positioned next to one another.

The top side of the circuit breaker 12, its drive rod 16, the disconnector 14 and its second drive rod 17 and the branch rail 18, ground contact 29 and sections of the rail 15 may be surrounded, as in the exemplary embodiment illustrated, by an electrically insulating barrier 10 which is used for dielectric separation (or insulation) with respect to the adjacent phases and with respect to the closed enclosure 30.

The cable connection or input conductor 33 is equipped with a solid cable insulation 42 which is used for insulation with respect to other conducting elements and the closed enclosure 30. The solid cable insulation 42 comprises an insulating plug 43 fitting a hole in the solid cable insulation 42 close to the input conductor 33. The insulating plug 43 is for example manufactured from rubber or any other suitable material which has electrically insulating properties but which is pierceable at the same time. The upper surface 45 of the insulating plug 43 may be in contact with the input conductor 33, or at a close distance from it. A thin, metal driving peg 51 is located at the lower surface 44 side of the insulating plug 43. The lower surface 44 may be covered with a conductive layer 46 for shielding the driving peg 51 from the input conductor 33 during normal operation of the switching installation. The driving peg 51 is guided by a metal plug 52, also fitted in the hole in the solid cable insulation 42. In the shown example, the metal plug 52 is grounded. Alternatively, the metal plug 52 not grounded itself but provides, when the driving peg 51 is actuated as described below, an electrical contact to the enclosure 30. Instead of using a metal plug, it is also possible to implement a driving peg 51 that is capable of conducting a large current. In such alternative embodiment the driving peg itself may be grounded. The insulating plug 43, the driving peg 51, and possibly the metal plug 52 together form a arc initiator, the functioning of which will be described below.

The enclosure 30 comprises an actuator having a mechanical link 50 with the enclosure 30. The mechanical link 50 connects a section 60 of the enclosure 30 to the driving peg 51.

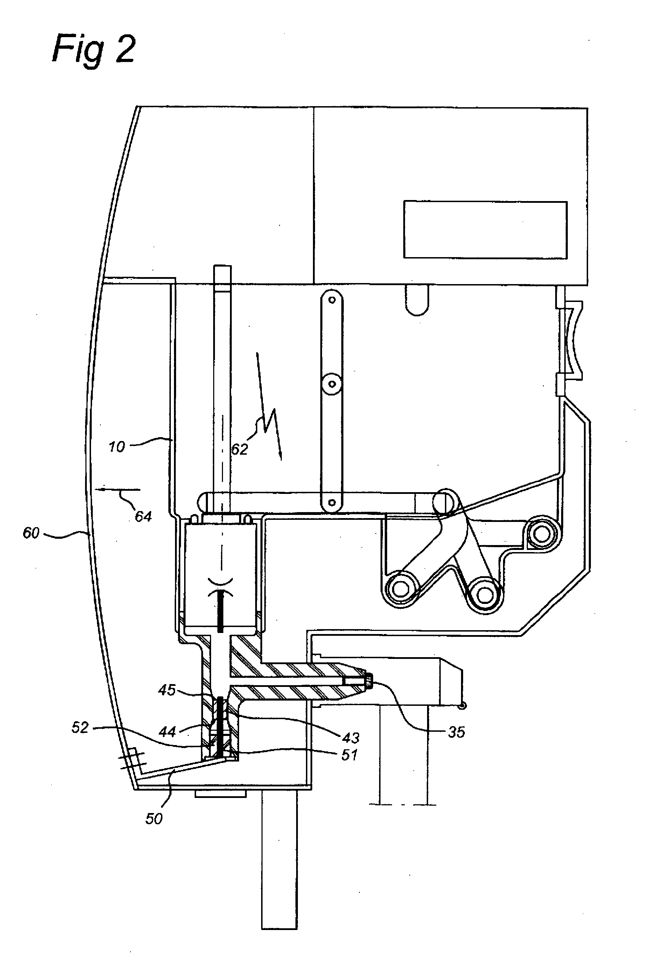

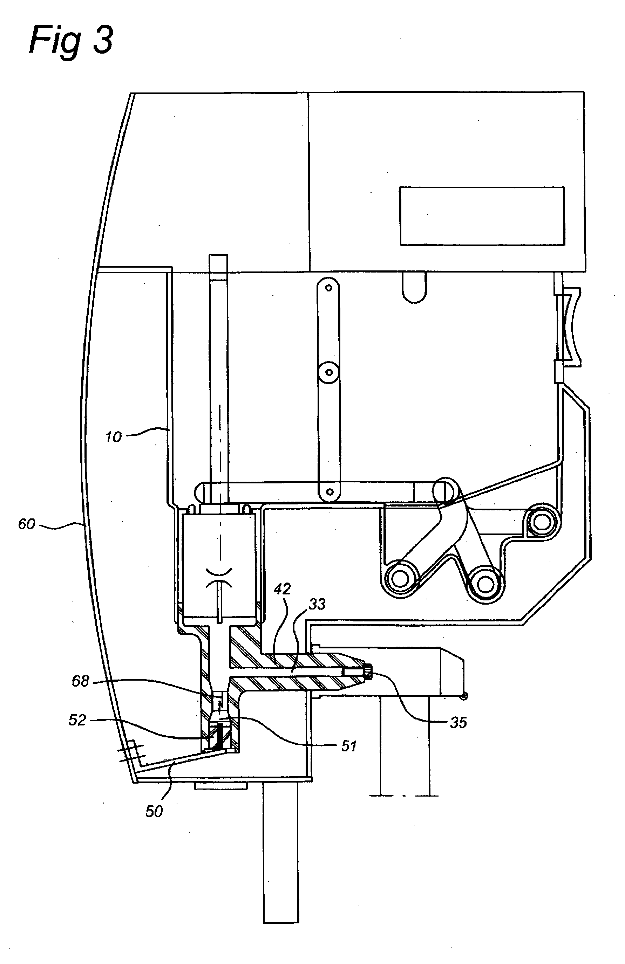

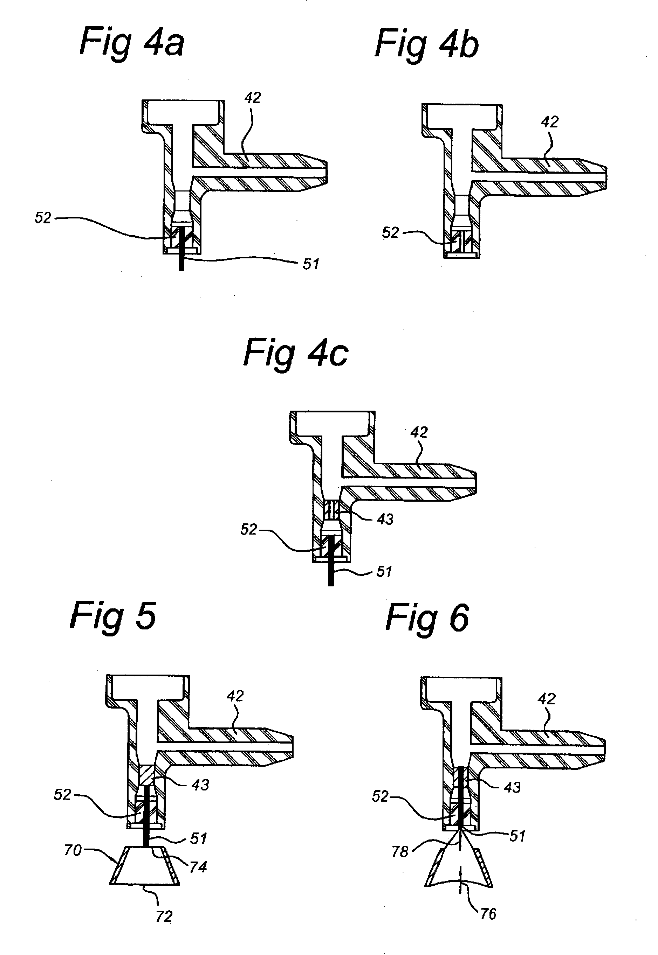

Fig. 2 shows the electrical switching installation 5 upon the occurrence of a first, energetic arc 62 between the disconnector 14 and the enclosure 30. This first arc 62 is so energetic that it generates a lot of heat, heating the air in the enclosure 30 and resulting in an expansion 64 of the section 60 of the enclosure 30. Due to the alternating current behaviour of the supply current, this energetic arc 62 may be maintained for a considerable time if no further measures would be applied, as it will ignite at each subsequent cycle of the alternating current. In this embodiment however, the expansion 64 of the enclosure acts on the mechanical link 50, which drives the driving peg 51 upward. The driving peg 51 perforates the insulating plug 43 all the way through the upper surface 45 thereof. In this way, a metallic and hence electrically conductive path is created from the input conductor 33 to ground. A large short-circuit current will run through the driving peg 51. As the driving peg 51 is too thin to be able to withstand this large current, the driving peg 51 will burn almost instantly, or at least its tip, extending out of the metal plug 52, leaving one of the situations shown in Fig. 4a-4c. The insulating plug 43 may also vaporize as shown in Fig. 4a-4b, or leave a channel as shown in Fig 4c. After the insulating plug 43 has been perforated or vaporized and the driving peg 51 has disappeared, a path is created for a second arc 68 between the input conductor 33 and the metal plug 52, as shown in Fig. 3. The second arc 68 thus has a short length, hence lower energy than the first energetic arc 62, and is created at a well-defined position. The first energetic arc 62 is now extinguished and the associated risks are removed. The second lower energetic arc 68 usually continues until the voltage is taken of the input conductor 33 with an external switch on the power supply line 35.

An alternative embodiment is shown in Fig. 5. Instead of the mechanical link, the actuator 50 in the enclosure 30 comprises a pressure box 70. The pressure box 70 has a flexible input surface 72 and a flexible output surface 74. The flexible output surface 74 is connected to a driving peg 51. The driving peg 51 is arranged to, upon being driven, perforate an insulating plug 43, like in the embodiment described above.

Fig. 6 shows the behaviour of the pressure box 70 upon the occurrence of a first, energetic arc 62. The expansion of the air in the enclosure 30 will act upon the flexible input surface 72, causing an inward movement 76 of the flexible input surface 72. The air, diluted air or gas inside the pressure box 70 will transfer this inward movement 76 of the flexible input surface 72 to an outward movement 78 of the flexible output surface 74, thus actuating the driving peg 51 in the upward direction to perforate the insulating plug 43.

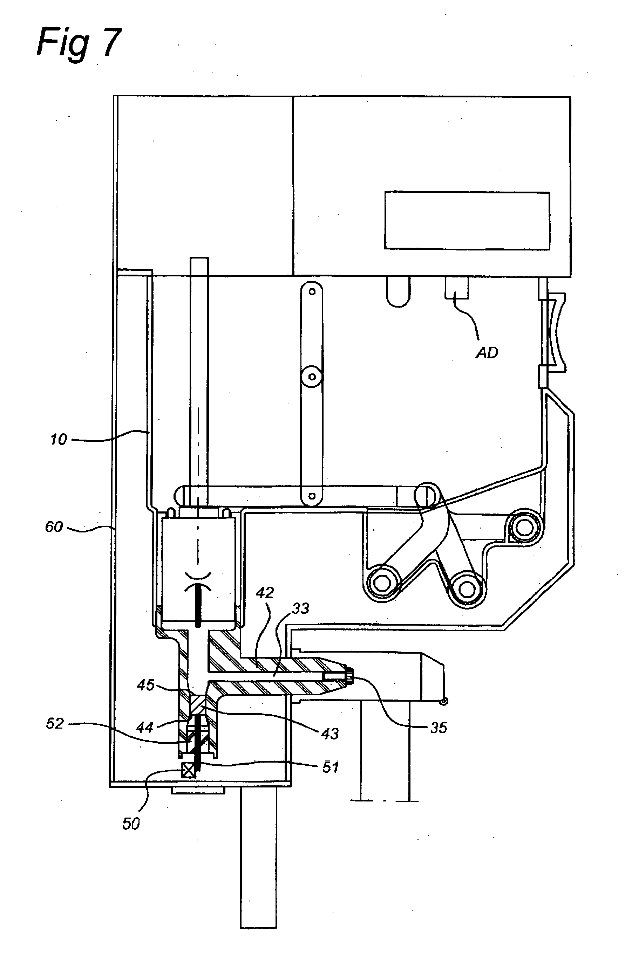

Another alternative embodiment is shown in Fig. 7. The enclosure 30 comprises an arc detector AD and an active actuator 50. The arc detector AD detects a level of light originating from a first arc 62 in the enclosure 30. The arc detector AD may detect an absolute light level or a variation (increase) in light level. Alternatively, the arc detector AD could detect a level of ionization originating from the first arc 62. The arc detector AD may detect an absolute ionization level or a variation (increase) in ionization level. If the arc detector AD detects an energetic arc, the active actuator 50 will operate to drive the driving peg 51. The driving peg 51 is arranged to, upon being driven, perforate an insulating plug 43, like in the embodiments described above. The active actuator 50 can be of many different nature. The active actuator 50 may be a motor, such as a linear motor, driving the driving peg 51. Alternatively, the active actuator 50 may release a pre-tensioned spring (not drawn) acting on the driving peg 51 upon being released.

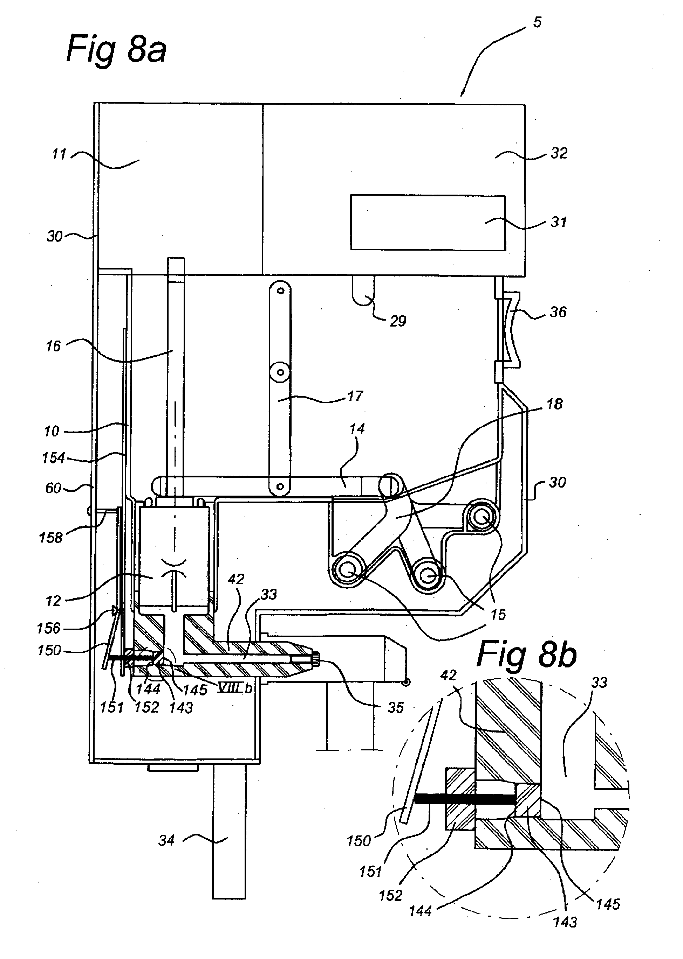

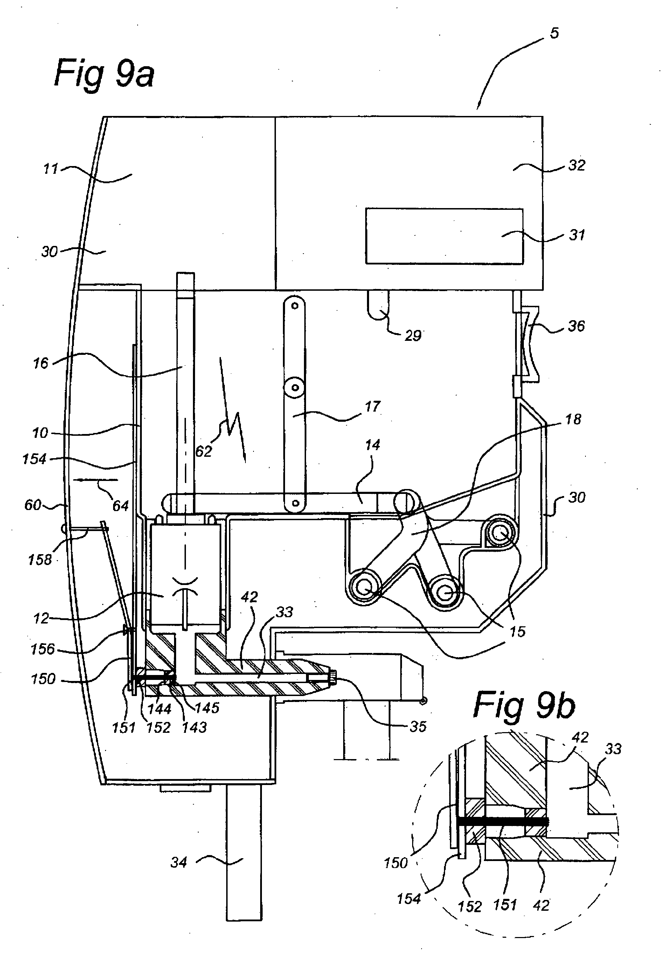

Another embodiment is shown in Fig. 8a, Fig. 8b and Fig. 9. Fig. 8a shows a simplified cross-sectional view through an enclosure in a switching installation according to a fourth embodiment of the present invention. Fig. 9 shows a cross-sectional view upon energetic arcing. Fig. 8b shows a detail of Fig. 8a.

The embodiment differs from the embodiments shown in Fig. 1-7, in that the arc initiator 143, 151, 152 is arranged with the driving peg 151 in a horizontal arrangement. A mechanically-fixed reference plate 154 is mounted in between the insulating barrier 10 and the enclosure 30. The actuator comprises a hinged mechanical link 150, a hinge 156 and a connector 158. The hinged mechanical link 150 is connected to the reference plate 154 with the hinge 156 and connected to the enclosure with the connector 158. Upon energetic arcing, a pressure increase will cause an expansion 64 of the section 60 of the enclosure. The expansion 64 of the section 60 of the enclosure acts via the connector 158 on the hinged transfer link 150. The upper part 252 of the hinged mechanical link 150 in between the connector 158 and the hinge 156 will thus move to the left. This movement is transferred via the hinge 156 to a movement to the right of the lower part of the hinged mechanical link 150. This drives a driving peg 151 to the right. The driving peg 151 is guided by a metal plug 152. In this exemplary embodiment, the metal plug 152 is grounded. The driving peg 151 penetrates the insulating plug 143 in the solid cable insulation 42 around the input conductor 33 from the left surface 144 to the right surface 145, thus creating a path for the second, lower-energetic arc 68 from the input conductor 33 to the grounded metal plug 152.

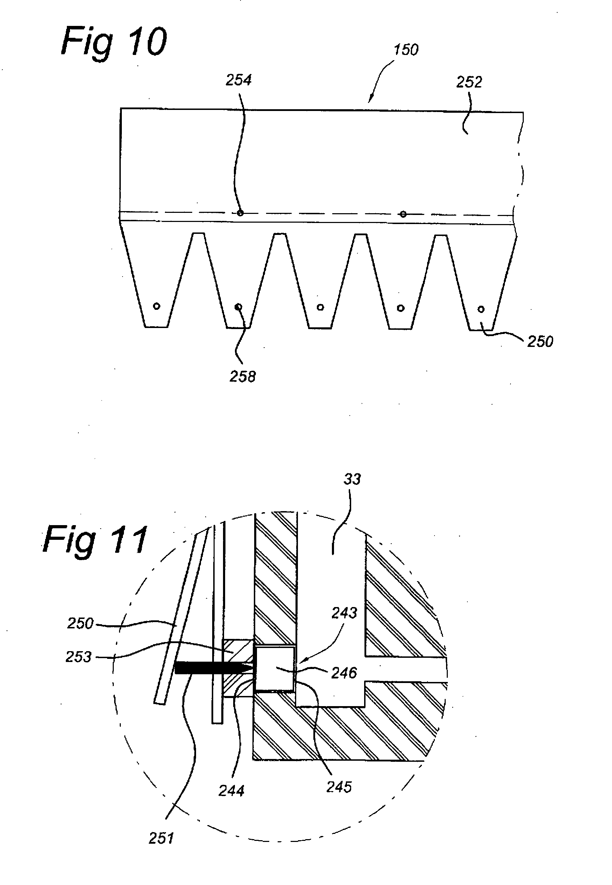

Fig. 10 shows a mechanical link for use in this fourth embodiment, when the embodiment is used in a three-field switching installation of a three-phase design. In this embodiment, the components (input conductor 33, circuit breaker 12, disconnector 14, drive rods 16, 17) inside the insulating barrier 10 and the solid cable insulation 142 of different phases are physically and electrically separated from one another within the enclosure 30. Each solid cable insulation comprises a respective insulating plug 143, associated with a corresponding arc initiator. The enclosure 30 is common to all phases and all fields.

The hinged mechanical link 150 is a single, common element for all three fields and all three phases. The hinged mechanical link 150 connects via connectors 158 to the enclosure 30 for each phase and field, i.e. in this example with nine connectors 158 in total connected to the upper part 252 of the hinged mechanical link 150. The hinged mechanical link 150 further comprises a plurality of fingers 250 on the lower part. The plurality of fingers comprises one finger 250 for each arc initiator, each finger 250 being arranged for driving a corresponding driving peg 151 from a corresponding position 258 on the corresponding finger 250.

The part 60 of the enclosure that may expand upon the occurrence of an energetic arc will thus affect the hinged mechanical link 150 to transfer the expansion of the part 60 of the enclosure to each of the driving pegs 151 of the arc initiators via the hinges 156 at positions along a hinge axis 256 and the fingers 250. The fingers 250 have a sufficiently large stiffness to transfer the movement of the hinged mechanical link 150 to the driving pegs 151 and to perforate the insulating plugs 143. Moreover, each of the fingers 250 is sufficiently resilient to allow the movement of the hinged mechanical link 150 to complete until also all other fingers have perforated the corresponding insulating plugs, hence until all fields and phases are provided with a respective current path to ground.

In further embodiments, the insulating plug 43 or 143 is a substantially solid plug made from an insulating material, e.g. rubber.

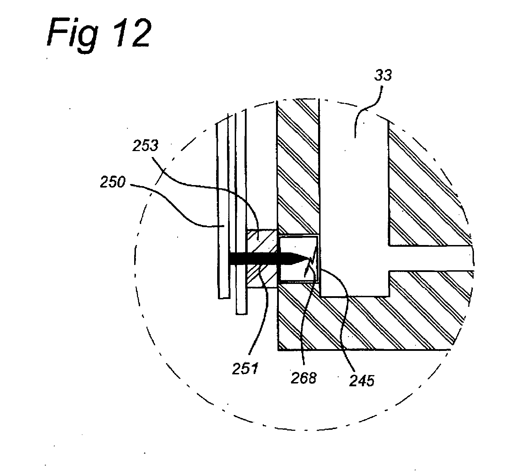

An alternative embodiment of the insulating plug is shown in Fig. 11 and Fig. 12. In this alternative embodiment, the insulating plug 243 comprises a vacuum chamber 246 with a first end cap 244 and a second end cap 245. A driving peg 251 is arranged close to the first end cap 244 and is arranged to be guided by a metal plug 252 for perforating the first end cap 244 when an actuator 250 is activated upon the occurrence of an energetic arc 62 in the enclosure. The vacuum chamber 246 normally contains a vacuum, providing a strong insulation between the input conductor 33 and other conductive parts such as the driving peg 251. When the actuator 250 is activated however, the driving peg 251 perforates the first end cap 244, thus breaking the vacuum. In further embodiments, the movement of the driving peg 251 may continue until it is in contact with the second end cap 245 and in still further embodiments, the driving peg 251 may also perforate the second end cap 245.

Once the first end cap 254 is perforated and the vacuum is broken, the vacuum chamber 243 fills with the gas, e.g. the air, from the enclosure. As a result, the good insulation earlier provided by the vacuum is lost, and arcing with a second arc 268 occurs between the input conductor 33 and the driving peg 251. In alternative embodiments, arcing will occur between the input conductor 33 and the actuator 250 and/or the metal plug 252. This second arc 268 then carries away the current from the input conductor 33 to ground and the energetic arc 62 is extinguished. The second arc 264 has a smaller length and is lower-energetic than the energetic arc 62 in the enclosure, thus reducing the risk of harm to the installation and/or to operating personnel near the installation.

The present invention has been illustrated on the basis of (simplified) embodiments illustrated in the figures. It will be clear to the person skilled in the art that numerous variations and modifications are possible within the inventive concept of the present invention, e.g., although the embodiments illustrated in the figures employ an air-filling in the enclosure, the enclosure may also be filled with SF₆. Elements described in relation with one embodiment may be used in relation with another embodiment, e.g. the different embodiments of actuators may be used with any of the different embodiments of arc initiators.

## Claims

1. A switching installation (5) comprising:
- a gas-filled enclosure (30);
- an input conductor (33) arranged to carry an input voltage, wherein the input conductor (33) and the enclosure (30) are insulated from each other by solid insulation;
- an actuator (50; 150, 156, 158; 250); and
- an arc initiator (43, 51, 52; 143, 151, 152; 243, 251), wherein the actuator (50; 150, 156, 158; 250) is arranged to actuate the arc initiator (43, 51, 52; 143, 151, 152; 243, 251) upon the occurrence of a first arc (62) with a first length in the enclosure (30),
**characterized in that**
the arc initiator (43, 51, 52; 143, 151, 152; 243, 251) creates, upon being actuated, an interrupted grounding path for a second arc (68; 268) of a second length through the solid insulation from the input conductor (33) to the arc initiator (43, 51, 52; 143, 151, 152; 243, 251), the second length being shorter than the first length.

2. The switching installation (5) according to claim 1, wherein
the actuator (50; 150, 156, 158; 250) is arranged to react on an increase in pressure in the enclosure (30) upon the occurrence of the first arc (62).

3. The switching installation (5) according to claim 2, wherein
the actuator (50; 150, 156, 158; 250) comprises a mechanical link (50; 150, 158; 250) with the enclosure (30) and the actuator (50; 150, 156, 158; 250) is arranged to transfer an expansion of a part (60) of the enclosure (30) to the arc initiator (43, 51, 52; 143, 151, 152; 243, 251) using the mechanical link (50; 150, 158; 250).

4. The switching installation (5) according to claim 2, wherein
the actuator (50) comprises a pressure box (70) with a flexible input surface (72) and a flexible output surface (74) connected to the arc initiator,
the pressure box being arranged for reacting on the increase in pressure in the enclosure (30) with an inward movement (76) of the flexible input surface (72) and generating an outward movement (78) of the flexible output surface (74).

5. The switching installation (5) according to claim 1 or 2, wherein the actuator (50) comprises an arc detector (AD) sensing the occurrence of an arc.

6. The switching installation (5) according to claim any one of the claims 1-5, wherein the second length is at most half of the first length.

7. The switching installation (5) according to claim any one of the claims 1-6, wherein the actuator (50; 150; 250) and the arc initiator (43, 51, 52; 143, 151, 152; 251) are situated inside the enclosure (30).

8. The switching installation (5) according to claim any one of the claims 1-7, wherein the solid insulation comprises a solid cable insulation (42) for isolating the input conductor (33) and the arc initiator (43, 51, 52; 143, 151, 152; 243, 251) is arranged to create, upon being actuated, the path for the second arc (68; 268) through a section of the solid cable insulation (42).

9. The switching installation (5) according to claim 8, wherein the solid cable insulation (42) is provided with a hole, and wherein the arc initiator (43, 51, 52; 143, 151, 152; 243, 251) comprises a driving peg (51; 151; 251) and an insulating plug (43; 143; 243) with a first surface (44; 144; 244) and a second surface (45; 145; 245), the insulating plug (43; 143; 243) being inserted in the hole of the solid cable insulation (42), and the driving peg (51; 151; 251) being arranged to, when actuated by the actuator (50; 150; 250), perforate the insulating plug (43; 143; 243) from the first surface (44; 144; 244) substantially to the second surface (45; 145; 245).

10. The switching installation (5) according to claim 9, wherein the arc initiator further comprises a grounded metallic plug (52; 152; 253) with a guiding channel for guiding the driving peg (51; 151; 251).

11. The switching installation (5) according to claim 9 or 10, wherein the insulating plug (243) comprises a vacuum chamber (246) and the first surface comprises a first end cap (244) arranged to maintain a vacuum in the vacuum chamber (246) when the first end cap (244) is intact and to break the vacuum when the first end cap (244) is perforated by the driving peg (251).

12. The switching installation (5) according to any one of the preceding claims, further comprising:
a circuit breaker (12), which is connected to the input conductor (33), an optional disconnector (14) for making or breaking a conductive connection between the input conductor (33) and a rail system (15), the disconnector (14) and the rail system (15) running through the enclosure (30).

13. A method for use with a switching installation (5) according to claim 1 comprising a gas-filled enclosure (30) and an input conductor (33) arranged to carry an input voltage, wherein the input conductor (33) and the enclosure (30) are insulated from each other by solid insulation, wherein the method comprises:
- creating upon the occurrence of a first arc (62) with a first length in the enclosure (30) an interrupted grounding path for a second arc (68) of a second length through the solid insulation from the input conductor to ground, the second length being shorter than the first length.

14. Method according to claim 13, wherein creating the path for the second arc (68) comprises reacting on an increase in pressure in the enclosure (30).

15. Method according to claim 13 or 14, wherein the path for the second arc (68) is created through a section (43) of a solid cable insulation (42) around an input conductor (33) arranged to carry an input voltage, the input conductor (33) and the enclosure (30) being insulated from each other by gas and solid insulation (10, 42), comprising the solid cable insulation (42).

## Patentansprüche

1. Schaltanlage (5), die Folgendes umfasst:
- ein gasgefülltes Gehäuse (30);
- einen Eingangsleiter (33), der so angeordnet ist, dass an ihm eine Eingangsspannung angelegt ist, wobei der Eingangsleiter (33) und das Gehäuse (30) voneinander mit einer festen Isolierung isoliert sind;
- ein Stellglied (50; 150,156, 158; 250); und
- ein Lichtbogeninitiator (43, 51, 52; 143, 151, 152; 243, 251), wobei das Stellglied (50; 150, 156, 158; 250) so angeordnet ist, dass es den Lichtbogeninitiator (43, 51, 52; 143, 151, 152; 243, 251) beim Auftreten des ersten Lichtbogens (62) mit einer ersten Länge im Gehäuse betätigt (30),
**was sich dadurch auszeichnet, dass**
der Lichtbogeninitiator (43, 51, 52; 143, 151, 152; 243, 251) bei seiner Betätigung einen unterbrochenen Erdungsweg für einen zweiten Lichtbogen (68; 268) von einer zweiten Länge durch die feste Isolierung vom Eingangsleiter (33) zum Lichtbogeninitiator (43, 51, 52; 143, 151, 152; 243, 251) generiert, wobei die zweite Länge kürzer ist als die erste Länge.

2. Schaltanlage (5) gemäß Anspruch 1, worin
das Stellglied (50; 150, 156, 158; 250) so angeordnet ist, dass es auf einen Druckanstieg im Gehäuse (30) bei Auftreten des ersten Lichtbogens (62) reagiert.

3. Schaltanlage (5) gemäß Anspruch 2, worin
das Stellglied (50; 150, 156, 158; 250) eine mechanische Verbindung (50; 150, 158; 250) mit dem Gehäuse (30) umfasst und worin das Stellglied (50; 150, 156, 158; 250) so angeordnet ist, dass eine Ausdehnung eines Teils (60) des Gehäuses (30) mithilfe der mechanischen Verbindung (50; 150, 158; 250) an den Lichtbogeninitiator (43, 51, 52; 143, 151, 152; 243, 251) übertragen wird.

4. Schaltanlage (5) gemäß Anspruch 2, worin
das Stellglied (50) einen Druckbehälter (70) mit einer flexiblen Eingangsoberfläche (72) und einer flexiblen Ausgangsoberfläche (74), verbunden mit dem Lichtbogeninitiator, umfasst, wobei der Druckbehälter so angeordnet ist, dass er auf den Druckanstieg im Gehäuse (30) mit einer nach innen gerichteten Bewegung (76) der flexiblen Eingangsoberfläche (72) und der Generierung einer nach außen gerichteten Bewegung (78) der flexiblen Ausgangsoberfläche (74) reagiert.

5. Schaltanlage (5) gemäß Anspruch 1 oder 2, worin das Stellglied (50) einen Lichtbogenmelder (Arc Detector, AD) umfasst, der das Auftreten eines Lichtbogens erkennt.

6. Schaltanlage (5) gemäß irgendeinem der Ansprüche 1-5, worin die zweite Länge maximal der Hälfte der ersten Länge entspricht.

7. Schaltanlage (5) gemäß irgendeinem der Ansprüche 1-6, worin sich Stellglied (50; 150; 250) und Lichtbogeninitiator (43, 51, 52; 143, 151, 152; 251) im Gehäuse befinden (30).

8. Schaltanlage (5) gemäß irgendeinem der Ansprüche 1-7, worin die feste Isolierung eine feste Kabelisolierung (42) zur Isolierung des Eingangsleiters (33) umfasst und worin der Lichtbogeninitiator (43, 51, 52; 143, 151, 152; 243, 251) so angeordnet ist, dass bei dessen Betätigung der Weg des zweiten Lichtbogens (68; 268) durch einen Teil der festen Kabelisolierung (42) verläuft.

9. Schaltanlage (5) gemäß Anspruch 8, worin die feste Kabelisolierung (42) mit einer Öffnung versehen ist, und worin der Lichtbogeninitiator (43, 51, 52; 143, 151, 152; 243, 251) über einen Treiberstift (51; 151; 251) und einen Isolierstopfen (43; 143; 243) mit einer ersten Oberfläche (44; 144; 244) und einer zweiten Oberfläche (45; 145; 245) verfügt, wobei der Isolierstopfen (43; 143; 243) in die Öffnung der festen Kabelisolierung (42) eingeführt wird und der Treiberstift (51; 151; 251) so angeordnet ist, dass, wenn er vom Stellglied (50; 150; 250) betätigt ist, den Isolierstopfen (43; 143; 243) von der ersten Oberfläche (44; 144; 244) bis maßgeblich zur zweiten Oberfläche (45; 145; 245) perforiert.

10. Schaltanlage (5) gemäß Anspruch 9, worin der Lichtbogeninitiator zudem über einen geerdeten Metallstopfen (52; 152; 253) mit einem Führungskanal für den Treiberstift (51; 151; 251) verfügt.

11. Schaltanlage (5) gemäß Anspruch 9 oder 10, worin der Isolierstopfen (243) über eine Unterdruckkammer (246) verfügt und die erste Oberfläche eine erste Endkappe (244) umfasst, die so angeordnet ist, dass in der Unterdruckkammer (246) ein Unterdruck gehalten wird, wenn die erste Endkappe (244) intakt ist, und dass der Unterdruck aufgehoben wird, wenn die erste Endkappe (244) vom Treiberstift (251) perforiert wird.

12. Schaltanlage (5) gemäß einem der vorstehenden Ansprüche, die darüber hinaus Folgendes umfasst:
einen Leistungsschutzschalter (12), der mit dem Eingangsleiter (33) verbunden ist, einen optionalen Lasttrenner (14) zum Herstellen oder Unterbrechen einer leitenden Verbindung zwischen dem Eingangsleiter (33) und einem Schienensystem (15), wobei der Lasttrenner (14) und das Schienensystem (15) durch das Gehäuse verlaufen (30).

13. Verfahren zur Anwendung mit einer Schaltanlage (5) gemäß Anspruch 1, die ein gasgefülltes Gehäuse (30) und einen Eingangsleiter (33) umfasst, der so angeordnet ist, dass an ihm eine Eingangsspannung anliegt, worin der Eingangsleiter (33) und das Gehäuse (30) voneinander mit einer festen Isolierung isoliert sind, worin das Verfahren Folgendes umfasst:
- Bei Auftreten eines ersten Lichtbogens (62) mit einer ersten Länge im Gehäuse (30) Erstellung eines unterbrochenen Erdungsweges für einen zweiten Lichtbogen (68) mit einer zweiten Länge durch die feste Isolierung vom Eingangsleiter an Masse, wobei die zweite Länge kürzer ist als die erste Länge.

14. Verfahren gemäß Anspruch 13, worin die Generierung des Wegs für den zweiten Lichtbogen (68) die Reaktion auf einen Druckanstieg im Gehäuse (30) umfasst.

15. Verfahren gemäß Anspruch 13 oder 14, worin der Weg für den zweiten Lichtbogen (68) durch einen Bereich (43) der festen Kabelisolation (42) um einen Eingangsleiter (33) herum generiert wird, wobei dieser Eingangsleiter (33) so angeordnet ist, dass an ihm eine Eingangsspannung anliegt und dass er und das Gehäuse (30) voneinander durch Gas und durch eine feste Isolierung (10, 42), die die feste Kabelisolierung beinhaltet (42), isoliert sind.

## Revendications

1. Installation de commutation électrique (5) comprenant :
- une enceinte remplie de gaz (30);
- un connecteur d'entrée (33) placé pour transporter une tension d'entrée, dans lequel le connecteur d'entrée (33) et l'enceinte (30) sont isolés l'un de l'autre par une isolation solide;
- un actionneur (50; 150,156, 158; 250); et
- un arc activateur (43, 51, 52; 143, 151, 152; 243, 251), dans lequel l'actionneur (50; 150, 156, 158; 250) est placé pour déclencher l'arc activateur (43, 51, 52; 143, 151, 152; 243, 251) lorsque se produit un premier arc (62) avec une première longueur dans l'enceinte (30),
**caractérisée en ce que**
l'arc activateur (43, 51, 52; 143, 151, 152; 243, 251) crée, après avoir été déclenché, un circuit de mise à la terre interrompu pour un second arc (68; 268) de la seconde longueur à travers la solide isolation depuis le connecteur d'entrée (33) à l'arc activateur (43, 51, 52; 143, 151, 152; 243, 251), la seconde longueur étant plus courte que la première longueur.

2. Installation de commutation électrique (5) selon la revendication 1, dans laquelle l'actionneur (50; 150, 156, 158; 250) est placé pour réagir sur l'augmentation de la pression dans l'enceinte (30) lorsque se produit le premier arc (62).

3. Installation de commutation électrique (5) selon la revendication 2, dans laquelle l'actionneur (50; 150, 156, 158; 250) comporte une liaison mécanique (50; 150, 158; 250) avec l'enceinte (30) et l'actionneur (50; 150, 156, 158; 250) est placé pour transférer une expansion d'une partie (60) de l'enceinte (30) à l'arc activateur (43, 51, 52; 143,151, 152; 243, 251) utilisant la liaison mécanique (50; 150, 158; 250).

4. Installation de commutation électrique (5) selon la revendication 2, dans laquelle l'actionneur (50) comporte un boîtier à pression (70) avec une surface d'entrée flexible (72) et une surface flexible de sortie (74) connectée à l'arc activateur, le boîtier à pression étant placé pour réagir en fonction de l'augmentation de la pression dans l'enceinte (30) lors d'un mouvement d'entrée (76) de la surface d'entrée flexible(72) et générant un mouvement de sortie (78) à la surface flexible de sortie (74).

5. Installation de commutation électrique (5) selon les revendications 1 ou 2, dans laquelle l'actionneur (50) comporte un détecteur d'arc (AD) réagissant à la survenue d'un arc.

6. Installation de commutation électrique (5) selon l'une quelconque des revendications 1 à 5, dans laquelle la seconde longueur est au plus la moitié de la première longueur.

7. Installation de commutation électrique (5) selon l'une quelconque des revendications 1 à 6, dans laquelle l'actionneur (50; 150; 250) et l'arc activateur (43, 51, 52; 143, 151, 152; 251) sont situés à l'intérieur de l'enceinte (30).

8. Installation de commutation électrique (5) selon l'une quelconque des revendications 1 à 7, dans laquelle l' isolation solide comporte un câble solidement isolé (42) pour isoler le connecteur d'entrée (33) et l'arc activateur (43, 51, 52; 143, 151, 152; 243, 251) est placé pour créer, après avoir été déclenché, le chemin pour le second arc (68; 268) à travers une section du câble solidement isolé. (42).

9. Installation de commutation électrique (5) selon la revendication 8, dans laquelle le câble solidement isolé (42) est pourvu d'un trou/orifice et, dans laquelle l'arc activateur (43, 51, 52; 143, 151, 152; 243, 251) comporte un bouchon perforant (51; 151; 251) et une fiche isolante (43; 143; 243) avec une première surface (44; 144; 244) et une seconde surface (45; 145; 245), la fiche isolante (43; 143; 243) ayant été insérée dans le trou/orifice du câble solidement isolé (42), et le bouchon perforant (51; 151; 251) ayant été placé, quand il est déclenché par l'actionneur (50; 150; 250), pour perforer la fiche isolante (43; 143; 243) de la première surface (44; 144; 244) à sensiblement la seconde surface (45; 145; 245).

10. Installation de commutation électrique (5) selon la revendication 9, dans laquelle l'arc activateur comporte une fiche métallique branchée à la terre (52; 152; 253) avec un passage de câble électrique pour guider le bouchon perforant (51; 151; 251).

11. Installation de commutation électrique (5) selon les revendications 9 ou 10, dans laquelle la fiche isolante (243) comporte 18 chambre à vide (246) et la première surface comporte un premier bouchon d'extrémité (244) placé pour maintenir une pression par le vide dans la cloche à vide (246) quand le premier bouchon d'extrémité (244) est intact et pour rompre la pression par le vide quand le premier bouchon d'extrémité (244) est perforé par le bouchon perforant (251).

12. Installation de commutation électrique (5) selon l'une quelconque des revendications précédentes, comprenant en outre :
un disjoncteur (12), qui est connecté au connecteur d'entrée (33), un sectionneur optionnel (14) pour maintenir ou rompre une connexion conductrice entre le connecteur d'entrée (33) et un système de rail (15), le sectionneur (14) et le système de rail (15) à travers l'enceinte (30).

13. Procédé destiné à être utilisé avec une installation de commutation électrique (5) selon la revendication 1, comprenant une enceinte remplie de gaz (30) et un connecteur d'entrée (33) placé pour transporter une tension d'entrée, où le connecteur d'entrée (33) et l'enceinte (30) sont isolés l'un de l'autre par une isolation solide, dans lequel le procédé comprend :
- la création en cas de survenue d'un premier arc (62) avec une première longueur dans l'enceinte (30) d'un circuit de mise à la terre interrompu pour un second arc (68) d'une seconde longueur à travers l'isolation solide depuis le connecteur d'entrée branché à la terre, la seconde longueur étant plus courte que la première longueur.

14. Procédé selon la revendication 13, dans lequel la création du chemin pour le second arc (68) comprend la réaction sur une augmentation de la pression dans l'enceinte (30).

15. Procédé selon les revendications 13 à 14, dans lequel le chemin pour le second arc (68) est créé à travers une section (43) d'un câble solidement isolé (42) autour d'un connecteur d'entrée (33) placé pour transporter une tension d'entrée, le connecteur d'entrée (33) et l'enceinte (30) étant isolés l'un de l'autre par le gaz et une isolation solide (10,42), comportant le câble solidement isolé (42).
